# EUROPÄISCHE PATENTSCHRIFT

(11) **EP 1 340 341 B1**
(45) Veröffentlichungstag und Bekanntmachung des Hinweises auf die Patenterteilung: **06.09.2006**
(21) Anmeldenummer: 01995676.2
(22) Anmeldetag: 28.11.2001
(51) Int. Cl.: H04L 12/40, H01R 13/629, G06F 13/40, B60R 16/02, H04L 12/413

(54) **BUSSYSTEM FÜR EIN LANDWIRTSCHAFTLICHES FAHRZEUG**
BUS SYSTEM FOR AN AGRICULTURAL VEHICLE
SYSTEME DE BUS DESTINE A UN VEHICULE AGRICOLE

(30) Priorität: 30.11.2000 DE 10059601
(43) Veröffentlichungstag der Anmeldung: 03.09.2003
(73) Patentinhaber: John Deere Fabriek Horst B.V., 5961 PT Horst (NL)
(72) Erfinder: BEEREN, Joseph, Marie, Henrie, NL-5961 SB Horst (NL)
(74) Vertreter: Holst, Sönke
(86) Internationale Anmeldenummer: PCT/EP2001/013903
(87) Internationale Veröffentlichungsnummer: WO 2002/045350

(56) Entgegenhaltungen:
- WO-A-94/07318
- WO-A-98/30961
- DE-A- 19 833 462
- DE-A- 19 915 429
- US-A- 5 748 910
- HUBER B: "FUER VMEBUS-BASIERENDE GEHAUSE: SCHALTER STATT STECKBRUECKE" UND- ODER- NOR + STEUERUNGSTECHNIK, DISTRIBUTION VERLAG GMBH. MAINZ, DE, Bd. 25, Nr. 3, 1. März 1992 (1992-03-01), Seiten 67-68, XP000288010

## Beschreibung

Die Erfindung betrifft ein Bussystem, mit einer Busleitung, an der elektronische Einrichtungen anschließbar sind, wobei mindestens eine elektronische Einrichtung an einer lösbaren Schnittstelle an die Busleitung anschließbar ist, die Schnittstelle fahrzeugseitig einen ersten Anschluss und einen zweiten Anschluss aufweist, von denen der erste Anschluss mit einem ersten Abschnitt der Busleitung und der zweite Anschluss mit einem zweiten Abschnitt der Busleitung verbunden sind, und eine Überbrückungseinrichtung selbsttätig eine Verbindung zwischen dem ersten Abschnitt der Busleitung und dem zweiten Abschnitt der Busleitung herstellt, wenn die Schnittstelle offen ist.

In der DE 196 24 027 A ist ein Bordcomputersystem für Arbeitsmaschinen beschrieben, das einen abnehmbaren Bordcomputer mit Speicher, Eingabeeinrichtungen und Anzeigevorrichtungen umfasst.

In der EP 0 203 662 A ist ein Übertragungssystem zur Übermittlung von elektronischen Nachrichten zwischen einem landwirtschaftlichen Gerät und einem Traktor beschrieben, das einen Bus in Form einer Leitung aufweist. An dem Bus sind elektronische Steuereinrichtungen für gesteuerte Geräte, Anzeigevorrichtungen und Sensoren jeweils über zugeordnete Terminal-Einheiten angeschlossen. Der Bus überträgt die Daten in serieller Form.

Derartige Bussysteme werden derzeit in der Regel als sogenannte CAN-Busse ausgeführt. Sie umfassen eine durchgehende Busleitung, an deren beiden Enden sich jeweils ein Abschlusswiderstand befindet. Alle steuernden und gesteuerten Steuereinrichtungen (Controller) der angeschlossenen Geräte sind an die Busleitung angeschlossen. Die CAN-Spezifikation erlaubt nur 1 m lange Stichleitungen von der Hauptleitung (Englisch: Backbone) zu den angeschlossenen Geräten bzw. Controllern. Die landwirtschaftliche Auslegung nach ISO 11783 erlaubt ebenfalls nur 1 m lange Stichleitungen. Das hat zur Folge, dass die Busleitung jeweils bis kurz vor den Stecker der angeschlossenen Geräte bzw. Controller geführt werden muss. Sie läuft also in vielen Abschnitten der Verkabelung doppelt, nämlich vom Hauptkabelbaum zum Stecker des Geräts und zurück.

Für den Fall, dass man ein abnehmbares Gerät mit der Busleitung verbinden will, sieht die Norm einen Steckverbinder vor, wobei man die Busleitung in der Nähe des Geräts (z. B. unterhalb der Kabinenkonsole) auftrennt und mit einer T-förmigen Verkabelung erweitert. In dieser T-förmigen Verkabelung wird die Busleitung von der Hauptleitung über eine erste Steckverbindung zu einer zweiten Steckverbindung geführt, an die das Gerät anschließbar ist. Die Busleitung wird dann von der zweiten Steckverbindung zu einer dritten Steckverbindung geführt, wo sie wieder mit der Hauptleitung verbunden wird. Um die Vorgaben der Norm bezüglich der Länge der Stichleitungen einzuhalten, muss man die zwei Abschnitte der Busleitung durch die zweite Steckverbindung führen. Die Verbindung der beiden Abschnitte der Busleitung untereinander erfolgt in dem an die Steckverbindung anzuschließenden, mit dem Gerät verbundenen Kabel (oder im Gerät). Falls das Gerät abgenommen wird, muss man eine Verbindung zwischen den beiden Abschnitten der Busleitung herstellen, um eine Unterbrechung der Busleitung zu vermeiden. Dazu ist ein geeigneter Stecker vorgesehen.

Als nachteilig ist dabei anzusehen, dass beim Ein- und Ausbau des Geräts die Busleitung während der Zeit, in der sich kein Stecker in der Steckverbindung befindet, unterbrochen ist. Wenn das Gerät abgenommen ist, und kein die Verbindung zwischen den Abschnitten der Busleitung herstellender Stecker vorhanden ist, ist die Busleitung funktionsuntüchtig.

In dem Artikel "Für VMEbus-basierende Gehäuse: Schalter statt Steckbrücke" in Und-Oder-Nor + Steuerungstechnik Bd. 25, Nr. 3 vom 1. März 1992, Seiten 67-68, wird eine Steckverbindung für einen Bus beschrieben. Um zu verhindern, dass die BusGrant-Leitung unterbrochen wird, wenn eine Tochterkarte aus dem Bus entnommen wird, ist ein Steckanschluss vorgeschlagen, in den eine Drahtbrücke integriert ist. Ist keine Tochterkarte eingesteckt, verbindet ein Kontaktbügel die beiden Anschlüsse der BusGrant-Leitung elektrisch. Wird die Tochterkarte eingesteckt, bewegt sie den Kontaktbügel in eine Position, in der er die beiden Kontaktbügel nicht mehr verbindet. Als nachteilig ist anzusehen, dass diese Lösung einen filigranen, mechanisch sehr empfindlichen Kontaktbügel umfasst, der bei den rauen Einsatzbedingungen landwirtschaftlicher Maschinen nicht hinreichend zuverlässig einsetzbar ist und dessen Lebensdauer nur eine beschränkte Anzahl an Schaltzyklen beträgt.

Die US 5 748 910 A beschreibt eine Einrichtung zum Ein- und Ausschalten eines Abschlusswiderstands eines Computerbusses. Das Vorhandensein eines Steckers wird erfasst und bei fehlendem Stecker wird der Abschlusswiderstand aktiviert. Diese Schnittstelle enthält keine Busabschnitte, die zur Aufrechterhaltung des Busses zu verbinden wären, sondern betrifft das Ende des Busses.

Das der Erfindung zugrunde liegende Problem wird darin gesehen, ein verbessertes Bussystem bereitzustellen, bei dem eine Funktion der Busleitung auch bei einem abgenommenen Gerät gewährleistet ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf ein Bussystem der oben beschriebenen Art. Durch eine lösbare Schnittstelle, die zum abnehmbaren Anbringen einer elektronischen Einrichtung in Form eines Geräts, Schaltkastens, Terminals, Controllers oder dergleichen dient, werden zwei Abschnitte der Busleitung geführt. Die beiden Abschnitte der Busleitung werden auf der der elektronischen Einrichtung zugewandten Seite der Schnittstelle verbunden, wenn eine elektronische Einrichtung an der Schnittstelle angeschlossen ist. Um zu verhindern, dass der erste Abschnitt der Busleitung vom zweiten Abschnitt der Busleitung getrennt ist, wenn kein Gerät an die Schnittstelle angeschlossen ist, wird eine (fahrzeugseitige) Überbrückungseinrichtung vorgeschlagen, die selbsttätig eine Verbindung zwischen dem ersten und dem zweiten Abschnitt der Busleitung herstellt, wenn die Schnittstelle frei ist, d. h. keine elektronische Einrichtung an der Schnittstelle angeschlossen ist. Die Überbrückungseinrichtung wird entsprechend angesteuert, falls die Schnittstelle frei ist, und verbindet die beiden Abschnitte der Busleitung dann miteinander. Ist eine elektronische Einrichtung an der Schnittstelle angeschlossen, löst die Überbrückungseinrichtung die Verbindung zwischen den beiden Abschnitten der Busleitung selbsttätig. Die Überbrückungseinrichtung weist einen elektronisch gesteuerten Schalter auf, der zur Verbindung des ersten Abschnitts der Busleitung mit dem zweiten Abschnitt der Busleitung eingerichtet ist. Der Schalter kann als Relais oder mit anderen elektronischen Schaltmitteln, wie Transistoren o.ä. ausgeführt sein. Er wird durch die Schnittstelle für die elektronische Einrichtung gesteuert. Dabei kann eine mechanische Erfassung des Status der Schnittstelle erfolgen, wobei ein in die Schnittstelle eingeführter Stecker mechanisch einen Kontakt öffnet oder schließt, über den der Schalter gesteuert wird. Auch eine elektronische Erfassung des Status der Schnittstelle ist denkbar, beispielsweise mittels eines induktiven Näherungsschalters. Bevorzugt ist jedoch, den Schalter elektrisch durch die Schnittstelle zu steuern. Ein dem Schalter zugeordneter Kontakt an der Schnittstelle wird nur dann, wenn eine elektronische Einrichtung an ihr angeschlossen ist, mit einem bestimmten Potential verbunden, beispielsweise mit Massepotential oder einer Betriebsspannung. Der Schalter verbindet oder trennt dann den ersten und zweiten Abschnitt der Busleitung entsprechend dem elektrischen Potential, das an dem dem Schalter zugeordneten Kontakt anliegt.

Anzumerken ist, dass die beiden, mit jeweils einem Abschnitt der Busleitung verbundenen Anschlüsse der Schnittstelle nicht in einer Steckverbindung oder dergleichen räumlich vereint sein müssen. Die Schnittstelle kann auch zwei räumlich getrennte Stecker oder dergleichen aufweisen. Die Überbrückungseinrichtung trennt dann die Verbindung zwischen dem ersten und dem zweiten Abschnitt der Busleitung, wenn beide Stecker mit der Schnittstelle verbunden sind.

Auf diese Weise vermeidet man, dass die Busleitung unterbrochen ist, wenn keine elektronische Einrichtung an der Schnittstelle angeschlossen ist. Die Anbringung eines Steckers an der Schnittstelle zur Wiederherstellung der Busverbindung bei abgenommener elektronischer Einrichtung erübrigt sich.

In der Regel ist die Überbrückungseinrichtung in relativ geringem Abstand von der Schnittstelle angeordnet, um die Länge der freien Stichleitungen bis zur Schnittstelle in dem durch die Norm gesetzten Rahmen zu halten. Ist die Überbrückungseinrichtung in größerem Abstand von der Schnittstelle angebracht, können die Busleitungen zwischen der Überbrückungseinrichtung und der Schnittstelle durch die Überbrückungseinrichtung selbsttätig vom übrigen Bus abgetrennt werden, um unerwünschte Störungen der Busleitung zu unterbinden.

Die Busleitung überträgt insbesondere elektrische Signale. Es wäre aber auch denkbar, eine optische Busleitung zu verwenden.

In den Zeichnungen ist ein nachfolgend näher beschriebenes Ausführungsbeispiel der Erfindung dargestellt. Es zeigt:
- Fig. 1: ein Blockdiagramm eines Bussystems und
- Fig. 2: ein Schaltdiagramm einer Überbrückungseinrichtung.

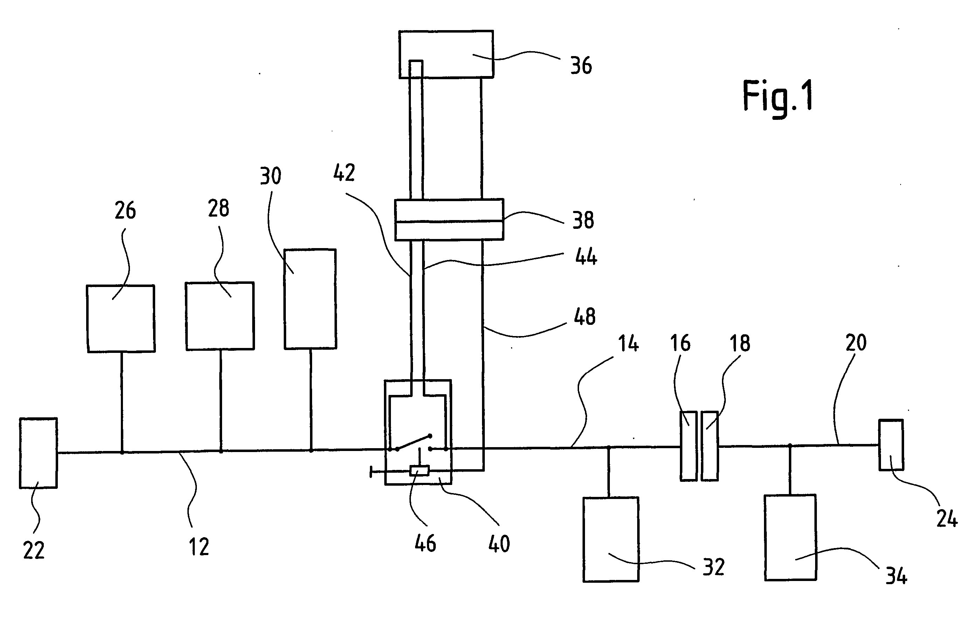

In Figur 1 ist ein Blockdiagramm eines erfindungsgemäßen Bussystems dargestellt. Es weist eine Busleitung auf, die sich aus einem ersten Abschnitt 12 und einem zweiten Abschnitt 14 zusammensetzt. Der zweite Abschnitt 14 der Busleitung ist über eine Steckverbindung, die sich aus einem ersten Verbinder 16 in Form eines selbsttätig abschaltenden Abschlusswiderstandes und einem zweiten Verbinder 18 zusammensetzt, mit einem dritten Abschnitt 20 der Busleitung verbunden. Die Busleitung ist an ihrem links eingezeichneten Ende durch einen ersten Abschlusswiderstand 22 und am rechts eingezeichneten Ende durch einen zweiten Abschlusswiderstand 24 abgeschlossen. Bei einem landwirtschaftlichen Fahrzeug kann der erste Abschnitt 12 und der zweite Abschnitt 14 der Busleitung auf einem Fahrzeug (z. B. Traktor) und der dritte Abschnitt 20 der Busleitung auf einem angebauten oder gezogenen Gerät (z. B. Sprühgerät) angebracht sein. An die Busleitung sind elektronische Einrichtungen 26-36 angeschlossen. Die elektronischen Einrichtungen 26-36 enthalten elektronische Steuereinheiten (Controller), die über die Busleitung in serieller Form untereinander kommunizieren. Sie sind steuernden Geräten (z. B. Eingabeeinrichtungen), Anzeigeeinrichtungen (Virtual Terminal), gesteuerten Geräten (z. B. Sprühdüsen) oder anderen elektronischen (Steuer-) Einrichtungen zugeordnet. Die Busleitung kann mehradrig sein. Derartige Bussysteme sind an sich bekannt und beispielsweise in der Norm ISO 11783 definiert.

Eine elektronische Einrichtung 36 ist über eine Schnittstelle 38 in Form einer aus Stecker und Buchse aufgebauten Steckverbindung lösbar mit dem Bussystem verbunden. Der erste Abschnitt 12 und der zweite Abschnitt 14 der Busleitung sind jeweils über eine Überbrückungseinrichtung 40 mit der Schnittstelle 38 verbunden. Die Schnittstelle 38 weist einen ersten Anschluss 42 auf, der mit dem ersten Abschnitt 12 der Busleitung verbunden ist, und einen zweiten Anschluss 44, der mit dem zweiten Abschnitt der Busleitung verbunden ist. Der erste Abschnitt 12 und der zweite Abschnitt 14 der Busleitung werden durch die Schnittstelle 38 zur elektronischen. Einrichtung 36 geführt, in der (oder deren Nähe) sie miteinander verbunden sind. Die Busleitung wird somit durch die Schnittstelle bis zur elektronischen Einrichtung 36 durchgeschleift. Ist die elektronische Einrichtung 36 von der Schnittstelle 38 getrennt und nichts an der Schnittstelle 38 angeschlossen, ist die Busleitung an dieser Stelle unterbrochen. Im Stand der Technik ist ein entsprechender Stecker an der Schnittstelle 38 anzubringen, wenn die elektronische Einrichtung abgenommen ist, der den ersten Anschluss 42 und den zweiten Anschluss 44 elektrisch miteinander verbindet.

Die Überbrückungseinrichtung 40 ist mit einem Schalter 46 in Form eines Relais ausgestattet. Falls an einer mit der Schnittstelle 38 verbundenen Leitung 48 eine Spannung anliegt, wie in Figur 1 dargestellt, ist der Schalter 46, der eingerichtet ist, den ersten Abschnitt 12 und den zweiten Abschnitt 14 der Busleitung miteinander zu verbinden, offen. Der erste Abschnitt 12 und der zweite Abschnitt 14 sind somit nicht durch den Schalter 46 verbunden. Die Leitung 48 wird über einen ihr zugeordneten Kontakt der Schnittstelle 38 von der elektronischen Einrichtung mit elektrischer Spannung (z. B. + 12 V) versorgt. Wird die Schnittstelle 38 geöffnet, wenn die elektronische Einrichtung 36 abgenommen wird, liegt an der Leitung 48 keine Spannung mehr an und der Schalter 46 schließt. Dadurch wird der erste Abschnitt 12 und der zweite Abschnitt 14 der Busleitung selbsttätig miteinander verbunden, so dass die Busleitung auch bei von der Schnittstelle 38 getrennter elektronischer Einrichtung 36 einwandfrei arbeitet.

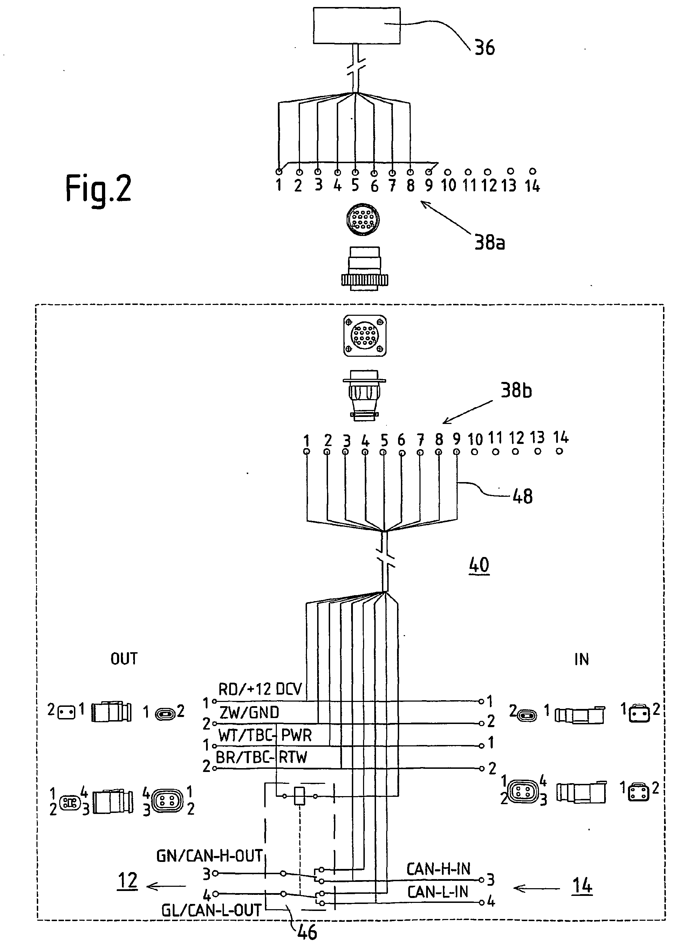

In Figur 2 ist eine Ausführungsform der Überbrückungseinrichtung 40 für einen CAN-Bus dargestellt. Sie weist als Schnittstelle 38 einen Stecker 38b (für eine Benutzerstation nach der LBS-Norm) auf, in den eine elektrisch mit der elektronischen Einrichtung 36 verbundene Muffe 38a einsteckbar ist. Die Überbrückungseinrichtung 40 ist durch Steckverbindungen mit den beiden Abschnitten. 12 und 14 der (in dieser Ausführungsform zweikanaligen) Busleitung verbunden, die zwei Datenkanäle (CAN H und CAN L) und zwei Leitungen zur Stromversorgung (TBC-PWR und TBC-RTW) umfasst. Außerdem ist die Überbrückungseinrichtung 40 steckbar mit einer parallel zur Busleitung verlegten Stromversorgungsleitung (+ 12 DCV und GRD) verbunden, die, wie auch die Stromversorgungskanäle der Busleitung, durch die Überbrückungseinrichtung 40 durchgeschleift wird. Die Überbrückungseinrichtung 40 ist somit aus der Busleitung heraustrenn- und abnehmbar. Denkbar wäre aber auch, sie - wie in Figur 1 angedeutet - permanent mit der Busleitung und/oder der Stromversorgungsleitung zu verbinden.

Der Stecker 38b der Schnittstelle 38 weist Kontakte auf, von denen jeweils einer mit den Stromversorgungsleitungen und mit den Datenkanälen des ersten Abschnitts 12 und des zweiten Abschnitts 14 der Busleitung verbunden ist. Die den als Relais ausgeführten Schalter 46 steuernde Leitung 48 ist mit einem Kontakt des Steckers 38b verbunden, der über einen entsprechenden Kontakt der Muffe 38a auf + 12 V gelegt wird, wenn Stecker 38b und Muffe 38a verbunden sind. Auf diese Weise erreicht man, dass die Kontakte des Schalters die Datenkanäle des ersten Abschnitts der Busleitung 12 mit den Datenkanälen des zweiten Abschnitts der Busleitung 14 verbinden, wenn Stecker 38b und Muffe 38a getrennt sind, wie in Figur 2 dargestellt. Anderenfalls ist der Schalter 46 offen, und die Busleitung wird in an sich bekannter Weise durch die Schnittstelle 38 hindurchgeführt. Auch die Stromversorgungsleitungen der Busleitung können wie die Datenkanäle umschaltbar durch die Schnittstelle 38 geführt werden.

## Patentansprüche

1. Bussystem, mit einer Busleitung, an der elektronische Einrichtungen (26-36) anschließbar sind, wobei mindestens eine elektronische Einrichtung (36) an einer lösbaren Schnittstelle (38) an die Busleitung anschließbar ist, die Schnittstelle (38) einen ersten Anschluss (42) und einen zweiten Anschluss (44) aufweist, von denen der erste Anschluss (42) mit einem ersten Abschnitt (12) der Busleitung und der zweite Anschluss (44) mit einem zweiten Abschnitt (14) der Busleitung verbunden ist, und eine Überbrückungseinrichtung (40) selbsttätig eine Verbindung zwischen dem ersten Abschnitt (12) der Busleitung und dem zweiten Abschnitt (14) der Busleitung herstellt, wenn die Schnittstelle (38) offen ist, **dadurch gekennzeichnet, dass** die Überbrückungseinrichtung (40) einen elektronisch gesteuerten Schalter (46) aufweist, der eingerichtet ist, den ersten Abschnitt (12) und den zweiten Abschnitt (14) der Busleitung zu verbinden, und dass der Schalter (46) durch die Schnittstelle (38) gesteuert wird.

2. Bussystem nach Anspruch 1, **dadurch gekennzeichnet, dass** die Überbrückungseinrichtung (40) keine Verbindung zwischen dem ersten Abschnitt (12) und dem zweiten Abschnitt (14) der Busleitung herstellt, wenn eine elektronische Einrichtung (36) an die Schnittstelle (38) angeschlossen ist.

3. Bussystem nach Anspruch 1 oder 2, **dadurch gekennzeichnet, dass** der elektronisch gesteuerte Schalter (46) ein Relais ist.

4. Bussystem nach einem der Ansprüche 1 bis 3, **dadurch gekennzeichnet, dass** der Schalter (46) auf elektrische, elektromechanische
oder mechanische Weise durch die Schnittstelle (38)
gesteuert wird.

5. Bussystem nach einem der Ansprüche 1 bis 4, **dadurch gekennzeichnet, dass** die Überbrückungseinrichtung (40) in geringem Abstand von der Schnittstelle (38) angeordnet ist.

6. Bussystem nach einem der Ansprüche 1 bis 5, **gekennzeichnet durch** eine elektrische Signale übertragende Busleitung.

7. Bussystem nach Anspruch 6, **dadurch gekennzeichnet, dass** die Busleitung ein CAN-Bus ist.

8. Arbeitsfahrzeug oder landwirtschaftliches Fahrzeug und/oder Gerät mit einem Bussystem nach einem der vorhergehenden Ansprüche.

## Claims

1. Bus system with a bus line, to which electronic devices (26-36) can be connected, wherein at least one electronic device (36) can be connected via a detachable interface (38) to the bus line, the interface (38) having a first connection (42) and a second connection (44), of which the first connection (42) is connected to a first section (12) of the bus line and the second connection (44) is connected to a second section (14) of the bus line, and a bypass device (40) automatically creates a connection between the first section (12) of the bus line and the second section (14) of the bus line, when the interface (38) is free, **characterised in that** the bypass device (40) has an electronically controlled switch (46), which is fitted to connect the first section (12) and the second section (14) of the bus line, and that the switch (46) is controlled via the interface (38).

2. Bus system according to Claim 1, **characterised in that** the bypass device (40) does not create a connection between the first section (12) and the second section (14) of the bus line, when an electronic device (36) is connected to the interface (38).

3. Bus system according to Claim 1 or 2, **characterised in that** the electronically controlled switch (46) is a relay.

4. Bus system according to one of Claims 1 to 3, **characterised in that** the switch (46) is controlled electrically, electromechanically or mechanically via the interface (38).

5. Bus system according to one of Claims 1 to 4, **characterised in that** the bypass device (40) is arranged at a short distance from the interface (38).

6. Bus system according to one of Claims 1 to 5, **characterised by** a bus line transmitting electrical signals.

7. Bus system according to Claim 6, **characterised in that** the bus line is a CAN bus.

8. Work vehicle or agricultural vehicle and/or device with a bus system according to one of the preceding claims.

## Revendications

1. Système de bus, comportant une ligne de bus, à laquelle peuvent être raccordés des dispositifs électroniques (26-36), au moins un dispositif électronique (36) pouvant être raccordé à la ligne de bus au niveau d'une interface (38) amovible, ladite interface (38) comportant une première connexion (42) et une deuxième connexion (44), parmi lesquelles la première connexion (42) est reliée à un premier tronçon (12) de la ligne de bus et la deuxième connexion (44) est reliée à un deuxième tronçon (14) de la ligne de bus, et un dispositif de pontage (40) établissant automatiquement une liaison entre le premier tronçon (12) de la ligne de bus et le deuxième tronçon (14) de la ligne de bus lorsque l'interface (38) est ouverte, **caractérisé en ce que** le dispositif de pontage (40) comporte un commutateur (46) commandé électroniquement, qui est conçu pour relier le premier tronçon (12) et le deuxième tronçon (14) de la ligne de bus et **en ce que** le commutateur (46) est commandé par l'intermédiaire de l'interface (38).

2. Système de bus selon la revendication 1, **caractérisé en ce que** le dispositif de pontage (40) n'établit pas de liaison entre le premier tronçon (12) et le deuxième tronçon (14) de la ligne de bus lorsqu'un dispositif électronique (36) est connecté à l'interface (38).

3. Système de bus selon la revendication 1 ou 2, **caractérisé en ce que** le commutateur (46) commandé électroniquement est un relais.

4. Système de bus selon l'une quelconque des revendications 1 à 4, **caractérisé en ce que** le commutateur (46) est commandé par voie électromécanique ou mécanique par l'intermédiaire de l'interface (38).

5. Système de bus selon l'une quelconque des revendications 1 à 4, **caractérisé en ce que** le dispositif de pontage (40) est agencé à faible distance de l'interface (38).

6. Système de bus selon l'une quelconque des revendications 1 à 5, **caractérisé par** une ligne de bus transmettant des signaux électriques.

7. Système de bus selon la revendication 6, **caractérisé en ce que** la ligne de bus est un bus CAN.

8. Véhicule de travail ou véhicule agricole et/ou machine comportant un système de bus selon l'une quelconque des revendications précédentes.
